# EUROPEAN PATENT SPECIFICATION

(11) **EP 2 216 198 B1**
(45) Date of publication and mention of the grant of the patent: **20.07.2011**
(21) Application number: 10250135.0
(22) Date of filing: 28.01.2010
(51) Int. Cl.: B60K 35/00, B60R 11/02, G02B 27/01, G01C 21/36

(54) **Driving aid**
Fahrhilfe
Assistance à la conduite

(30) Priority: 04.02.2009 GB 0901665
(43) Date of publication of application: 11.08.2010
(73) Proprietor: Benedetti International Limited, Netherton, Wishaw ML2 0JG (GB)
(72) Inventor: Benedetti, Giovanni, Ayrshire KA23 9LQ (GB)
(74) Representative: Coret, Sophie V.G.A.

(56) References cited:
- AU-B2- 2004 202 919
- AU-B2- 2005 201 740
- DE-A1- 10 030 819
- DE-U1-202007 012 319
- GB-A- 2 342 210
- US-A1- 2003 043 029

## Description

The invention relates to a display device for use in a vehicle, the display device being operable to provide a user of the vehicle with visible information relating to the correct orientation of the vehicle on a road or highway.

Vehicle manufacturers have, for some time, gone to great lengths to provide a plethora of information to the user of a vehicle. The information relayed to a driver may relate to the performance of the vehicle, such as the speed of travel, the fuel load and capacity of the vehicle and various other operating parameters. Other information relayed to the driver and/or to the passengers within the vehicle may include, for example, the date and time, or the ambient temperature.

US 2008/0158510 describes a system whereby information is projected onto a transparent windshield of a vehicle. The system requires a portion of the transparent windshield to be coated with a light emitting layer such that when a light beam is projected onto the light emitting layer, information is displayed on the windshield and is visible to the driver. The system requires modification of the windshield of the vehicle and the inclusion of a light emitting source within the vehicle's interior. A drawback of this system is, therefore, that it requires vehicle customisation and is restricted to use within the modified vehicle at a fixed, immoveable position.

A display device comprising the features of the preamble of claim 1 is known from AU 2005 201740 B2.

It is an object of the present invention to provide a display device operable to provide a vehicle's user with information relating to the correct orientation of the vehicle with respect to a driving surface.

It is a further object of the present invention to provide a display device, operable to provide a vehicle's user with information relating to the correct orientation of the vehicle with respect to a driving surface, which device is easily movable within a vehicle and is transferable from one vehicle to another.

It is an even further object of the present invention to provide a display device, operable to provide a vehicle's user with information relating to the correct orientation of the vehicle with respect to a driving surface, which device is useable regardless of the legal requirements on the orientation of a vehicle on a highway of different jurisdictions.

The present invention provides a display device for use in a vehicle according to claim 1, whereby the display device is comprising a display carrier and a display unit, wherein the display carrier is configured to contain the display unit, and at least one fixture element operable to releasably attach the display device to a surface, the display unit having at least two visible indicators adapted to provide a user of the vehicle with visual information relating to a correct and an incorrect orientation of the vehicle on a driving surface.

The display unit is removably locatable within the display carrier. More specifically, the display unit is a separate element of the display device and may be removed from the display carrier by a user.

In certain embodiments of the invention, the display unit is a reversible planar card.

The display unit is removably locatable within the display carrier and is also reversible. In this way, the orientation of the at least two visible indicators is reversible with respect to the display carrier. Thus, the at least two visible indicators may be orientated in a first orientation in which the user is presented with the visible information in a first orientation and, upon reversal of the display unit with respect to the display carrier, the at least two visible indicators may be orientated in a second orientation in which the user is presented with the visible information in a second orientation.

Thus, because the display carrier and/or the display unit is reversible, the at least two visible indicators presenting information of the correct and incorrect orientations of the vehicle on the driving surface may be reversed by the user as the vehicle travels from a first jurisdiction in which the correct orientation of the vehicle on the driving surface is on the left side of a highway to a second jurisdiction in which the correct orientation of the vehicle on the driving surface is on the right side of a highway.

In embodiments of the present invention, the at least two visible indicators are indirectly visible to the user. More specifically, the display device is located in the vehicle at a position not directly in the user's line of sight. The at least two visible indicators project an image onto the surface thereby providing a visible image of the at least two indicators to the user.

The image is preferably a reflection of the at least two visible indicators on the surface. Alternatively, the image is a light-emitted projection in the shape of the at least two visible indicators on the surface.

Preferably the surface is a front windshield of a vehicle. More specifically, the surface is the inner, transparent surface of the front windshield of a vehicle.

In embodiments of the invention, each of the at least two visible indicators comprises an indicia. More specifically, each of the at least two visible indicators may be a graphic symbol, such as a unidirectional arrow or a cross (letter X). Preferably each of the at least two visible indicators is a different indicia. In this way, the user can easily and quickly deduce the correct and the incorrect orientation of the vehicle on the driving surface.

It is much by preference that the correct orientation of the vehicle on the driving surface is visually indicated by a unidirectional arrow, arranged on the display unit so as to point towards the correct orientation of the vehicle on the driving surface. Thus, if a driver is required to orientate his/her vehicle on the left hand side of a driving surface with respect to the centre line, the unidirectional arrow will point to the left when the display device is fixed to a surface within the vehicle. If, on the other hand, the driver is required to orientate his/her vehicle on the right hand side of a driving surface with respect to the centre line, the unidirectional arrow will point to the right when the display device is fixed to a surface within the vehicle.

It is much by preference that the incorrect orientation of the vehicle on the driving surface is visually indicated by a letter "X". More specifically, the letter "X" will be arranged on the display unit to the left or right of the other visible indicator which other visible indicator is informing the driver of the correct orientation of the vehicle on the driving surface. Whether the letter "X" is arranged on the left or right of the other visible indicator will be reversible when the display carrier and/or display unit is reversed in orientation with respect to the surface onto which the display device is fixed.

Furthermore, the at least two visible indicators may be separated by a further visible indicator, which further indicator represents the centre line of the driving surface. More specifically, the display unit may further comprise a visible indicator at a centre point thereof and being a line or lines located perpendicular to the longitudinal edges of the display unit.

It is much by preference that the at least two visible indicators comprise a first visible indicia depicting the correct orientation of the vehicle on the driving surface, a second visible indicia depicting the incorrect orientation of the vehicle on the driving surface, and a third visible indicia depicting the centre line of the driving surface and located between the first and the second visible indicia on the display unit In these embodiments of the present invention, the first visible indicia is preferably a unidirectional arrow pointing away from the second and third visible indicia in the direction of the side of the display unit. The second visible indicia is preferably in the shape of a letter X and the third visible indicia is a broken line comprised of three smaller lines along a single axis. Thus, the driver is presented with information relating to the correct and the incorrect orientation of the vehicle on the driving surface as well as the position of the centre line of the driving surface. In this way, the driver is quickly and clearly able to distinguish between the correct and the incorrect orientation of the vehicle.

In embodiments of the invention, the at least two visible indicators are formed of a plastic material. More specifically, the indicators are formed of a coloured plastics material, wherein each of the at least two visible indicators is formed of a different colour of plastics material.

It is much by preference that the visible indicator depicting the correct orientation of the vehicle is formed of a green plastic material and the visible indicator depicting the incorrect orientation of the vehicle is formed of a red plastic material. It will readily be understood on reading the present disclosure that other colours of plastics material are envisaged and are intended to fall within the scope of the present application.

In embodiments of the invention the at least two visible indicia are formed of a transparent or translucent material. More specifically the at least two visible indicia are formed of a light emitting or transmitting material. The material is preferably made of a transparent or translucent plastic or resin material, such as PC mixed with specific dyes to obtain a light transforming material. These dyes absorb UV light and re-emit that energy in longer wavelengths effectively changing non-visible light to a visible wavelength. Internal reflection within the compound refocuses the light, emitting it more intensely along edges, thereby creating a glowing effect. Edge glow dyes can be readily obtained from different sources such, for example from RTP Company · 580 East Front Street · Winona, MN, 55987, USA. These dyes are completely soluble and distribute evenly within PC, acrylic glass, SAN, GPS, and clear ABS compounds. They are heat and light stable, they have no appreciable effect on either processing or performance characteristics of the original resin. Advantageously the display unit is made of a two-colour plate of such light transforming EDGE GLOW material which is sandwiched between two layer of mat black plastic. One side of the plate is etched with the indicia. The display carrier and display unit may be, except for the indicia forming material, formed of a matt black plastic. In this way, the indicia are visible to the driver without overall visual distraction.

The light emitting or transmitting material allows the passage of light so as to project the at least two visible indicia onto the surface to which the display device is to be attached. In this way, the display device will transmit the visible indicia onto the surface without requiring a separate light and/or power source.

By transmitting the visible indicia onto the surface)to which the display device is to be attached, the visible information is presented to the driver of the vehicle without the display device being directly in the driver's line of sight and, thereby, minimising the likelihood of distraction to the driver.

The display device may further comprise a power source operably linked to a light emitting source. The light emitting source is operable to emit light onto the visible indicia. In this way, the display device may be utilised in both light and dark conditions and is, therefore, useful both during the day and during the night.

Preferably the power source is operably linked to a switching mechanism whereby the power source may be switched on and/or off. The switching mechanism may be a simple binary on/off switch.

According to the invention, a light emitting source is located within the display carrier and/or the display unit. In this way, the image of the at least two visible indicators are projectable and/or reflected onto a surface.

The power source may be a solar panel and/or a battery, preferably a rechargeable battery. Alternatively, the power source may be a vehicle battery into which the display device may be plugged.

The light emitting source may be a light emitting diode (LED) or the like.

In embodiments of the invention, the at least one fixture element is operable to releasably attach the display device to a surface. More specifically, the fixture element may be repeatedly attached and detached to a surface. On attachment of the fixture element to the surface, the fixture element is operable to retain the display device on the surface, until detached therefrom by the user.

In preferred embodiments of the invention, the at least one fixture element comprises a suction cup. More specifically the display device comprises two suction cups operable to releasably attach the device to a surface. In this way, the user is able to moisten the surface of the suction cups and to place that moistened surface against the surface to which the display device is to be attached. The suction cups form a friction fit with the surface of the vehicle. The difference of pressure between the air trapped between the cup and the surface of the vehicle is such that the display device adheres to the surface of the vehicle until such time as the user wishes to remove the device from the surface. Removal of the device requires the user to simply break the friction contact between the edges of the suction cups and the surface of the vehicle allowing the inner pressure to balance with the external atmospheric pressure.

Because the display device is releasably and repeatably attachable to the surface of the vehicle, the device can easily and quickly be relocated within a vehicle, that is to say from one side of a vehicle to the other but, in addition, is portable between any number of vehicles, thus the user can transport the display device to the vehicle they wish to use.

It is much by preference that the surface to which the display device is to be applied is the front windshield of a vehicle such as a car or truck, or the like.

In embodiments of the invention, the at least one fixture element is attached to the display carrier.

More specifically, the at least one fixture element may further comprise an attachment element, which attachment element is mountable on the display carrier.

It is preferred that the attachment element is mounted on the display carrier and is moveable with respect to the display carrier. It is much preferred that the attachment element is rotatably mounted on and with respect to the display carrier.

In embodiments of the invention, the attachment element is a rotatable mounting comprises a ratchet and pawl mechanism by which the angle of the display device relative to the surface to which it is to be attached is adjustable through pre-determined distances. More specifically, the attachment element may comprise a cylindrical body having a plurality of ratchet elements arranged around the circumference thereof. The display carrier may comprise a corresponding pawl which is engageable with the ratchet elements on the attachment element. In use, the display carrier is mounted on the attachment element by way of two pins located at either end of the cylindrical body and corresponding recesses in the display carrier. The pins are freely rotatable in the recesses thereby allowing the display carrier to be rotated relative to the attachment element. The rotation of the display carrier with respect to the attachment element is restricted by the co-operation between the pawl and ratchet elements, thus, allowing the user to position the display carrier relative to the attachment element.

In this way, the at least one fixture element may be attached to the surface of the vehicle and the angle of the display carrier adjusted by the user such that the at least two visible indicators are clearly visible to the user of the vehicle.

The display carrier may comprise a housing, which housing comprises a base and four side walls upstanding from the base and perpendicular thereto. The base and the four side walls define a space configured to contain the display unit.

In embodiments of the invention, the housing further comprises at least one retaining element configured to positively locate and retain the display unit within the housing. More specifically, the at least one retaining element may be a lug or a flange, which projects from the side wall of the housing into the space provided between the base and the side walls. In operation, the display unit can be placed into the housing and is retained therein by the at least one retaining element.

The base of the housing of the display carrier may comprise a display unit removal hole. More specifically, the display unit removal hole is configured such that a user can push the display unit away from the base of the housing, thereby facilitating easy removal of the display unit from the display carrier. In this way, the user may easily remove the display unit and reverse the orientation of the display unit with respect to the display carrier. The orientation of the at least two visible indicators can, therefore, be readily reversed within the display device.

The display carrier may further comprise a power source casing.

In embodiments of the invention, the power source casing is connectable to the housing of the display carrier. In certain embodiments, the power source casing is formed integrally with the housing of the display carrier.

The power source casing is preferably connected to a side wall of the housing of the display carrier and is most preferably connected to the side wall of the housing of the display carrier that will be adjacent the surface to which the display device is to be mounted.

The power source casing may be a battery housing and/or may comprise a solar panel.

In order that the invention be easily understood and readily carried into effect, reference will now be made to the accompanying drawings in which:-
Figure 1 shows a schematic representation of a first embodiment of the display device according to the invention;
Figure 2 shows the display device of Figure 1 in plan view with the open side of the housing of the display carrier uppermost;
Figure 3 shows the display device of Figure 1 without the display unit; and
Figure 4 shows the display unit of Figure 1;
Figure 5 shows a perspective view of a second embodiment of the invention;
Figure 6 shows a schematic representation of the display device of Figure 5;
Figure 7 shows a schematic representation of the bottom of the display device of Figure 5;

Where a feature appears in more than one figure, the same reference numeral will be used to depict the same feature in all figures.

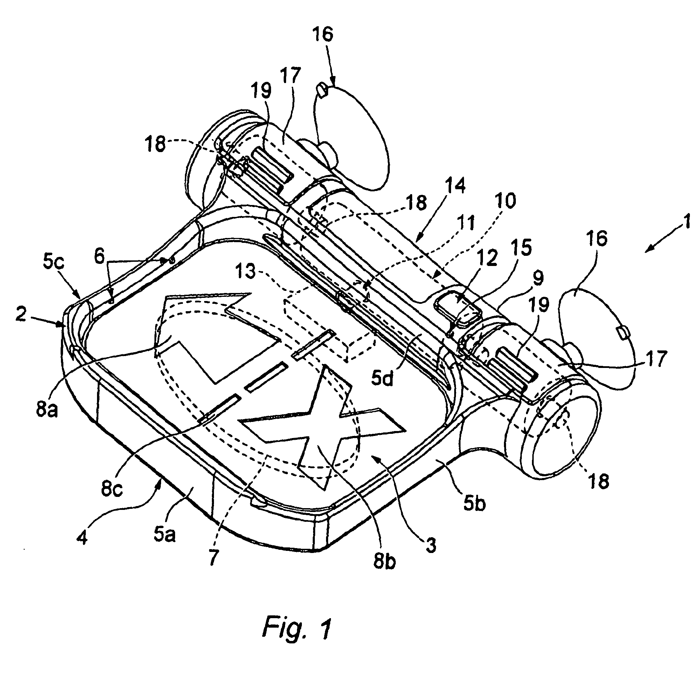

Figure 1 shows a display device 1 according to the present invention. The display device 1 comprises a display carrier 2 and a display unit 3. The display carrier 2 is in the form of a housing having a base 4 and side walls 5a, 5b, 5c, 5d. The side walls 5a, 5b, 5c, 5d are formed integrally with base 4 and project upwardly from the base perpendicular thereto. In the depicted embodiment, side wall 5c further comprises two retaining lugs 6 which project into the space defined by the housing, from the side wall 5c. Side walls 5a, 5b and/or 5d may additionally or alternatively comprise the retaining lugs 6. It will be understood, that retaining lugs 6 may be replaced by a flange extending from the side wall(s) 5a, 5b, 5c, 5d. Retaining lugs 6 are such that when removable display unit 3 is placed into the housing of display carrier 2, the retaining lugs 6 maintain the display unit 3 in position. In this way, the display unit 3 may be repeatedly removed and replaced into the display carrier 2 by a user. On removal of the display unit 3 from the display carrier 2, the user is able to reverse the orientation of the display unit 3 within display carrier 2 such that the information conveyed to the user is reversed.

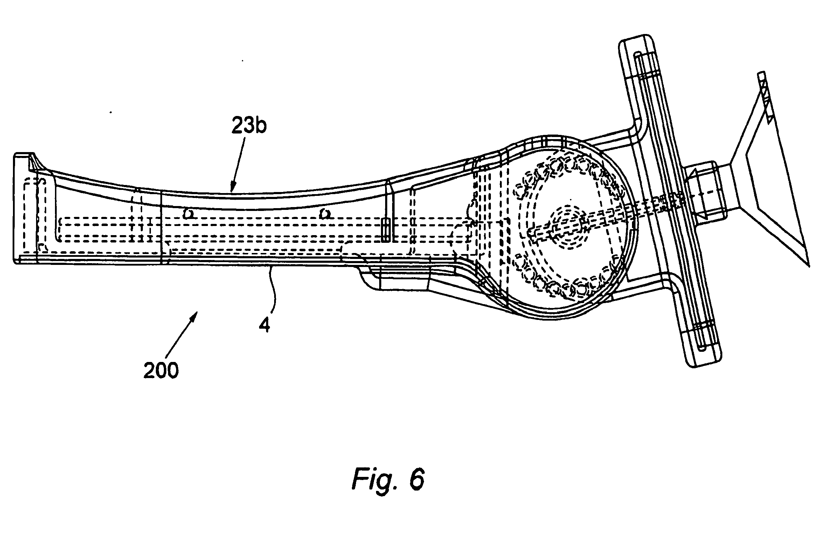

The opposing side walls 5b and 5c of the display carrier 2 are shaped so as to curve from high points at the junctions with the side walls 5a and 5d to low points (as shown in item 23b of the embodiment in figure 6) at the midpoint of the side walls 5b and 5c respectively.

The base 4 of the display carrier 2 has a display unit removal hole 7 (depicted in dotted lines) in the form of an oval-shaped opening in the base 4. The user is able to place a finger or fingers through the removal hole 7 and push the display unit 3 out of the housing of the display carrier 2 to facilitate and ease removal, and reversal, of the display unit 3 from the display carrier 4.

The display carrier 2, display unit 3 and retaining lugs 6 are each and all primarily formed of a matt black plastic material such as polycarbonate (PC), SAN poly(methyl methacryalte) and ABS.

The display unit 3 is in the form of a planar card-like element. Although not shown, the display unit 3 may be formed integrally with display carrier 2. In this embodiment, the display carrier 2 as a whole will be reversible by the user.

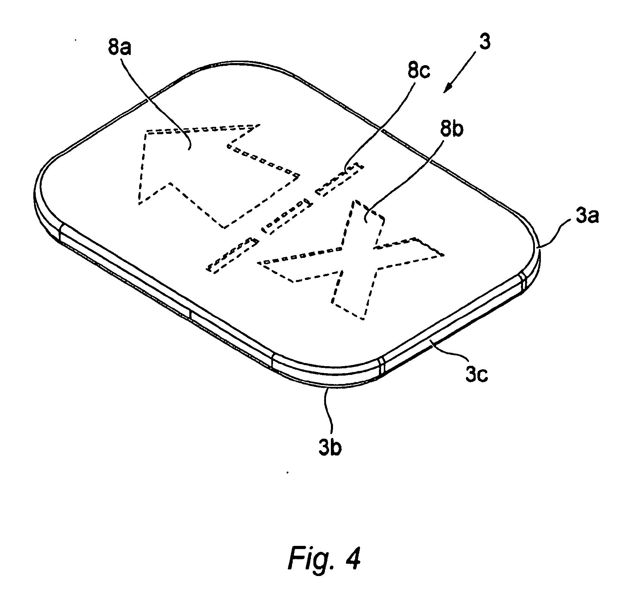

As best shown in Figure 4, the display unit 3 has three visible indicators 8a, 8b, 8c. The visible indicators are in the form of a unidirectional arrow 8a, a letter "X" 8b and a broken line 8c. The unidirectional arrow 8a points in a direction away from the X 8b and the broken line 8c and depicts the correct orientation of the vehicle of a driving surface. For example, on a highway having two lanes separated by a centre line, the unidirectional arrow will point towards the verge of the lane in which the vehicle is correctly to be positioned on the highway. The letter X 8b will be adjacent the unidirectional arrow 8a and, when the vehicle in which the display device is located is on a highway having two lanes separated by a centre line, the letter X 8b will be positioned on the display unit 3 to depict the lane in which the vehicle would incorrectly to be positioned of the highway, i.e. the lane of oncoming traffic. The broken line 8c is located on the display unit 3 between the unidirectional arrow 8a and the letter X 8c and depicts the relative position of the centre line of the highway between the correct and the incorrect lane thereof.

The unidirectional arrow 8a, the letter "X" 8b and the broken line 8c are formed from a light twin-coloured transmitting EDGE GLOW Perspex^{™} material 3c. The unidirectional arrow 8a and the broken line 8c are formed of a first coloured Perspex^{™} material, whilst the letter X 8b is formed of a second, different coloured Perspex^{™} material. The three visible indicators 8a, 8b and 8c are formed as a single-sided etched image from the Perspex^{™} material. In the depicted embodiment, the shape of indicators 8a, 8b and 8c, are etched into the matt black plastic material forming the exterior surfaces 3a and 3b of the display unit 3, and the shaped Perspex^{™} material forming the visible indicators is positioned in the etching such that the visible image is only on one side of the display unit 3. In this way, the user is required to physically reverse the display unit 3 within the display carrier 2 in order to reverse the correct and incorrect orientations of the information.

The display carrier 2 is integrally formed with a battery casing 9, which casing 9 is sized and shaped to contain a single AA size battery 10. The battery 10 is electrically connected to a light source 11 in the form of an LED. The LED 11 is located within a recess in side wall 5d of the display carrier 2 and is positioned to emit light onto the visible indicators 8a, 8b, 8c. In this way, light in the form of either natural or electric light can be provided to the light reflective visible indicators 8a, 8b, 8c. Thus, the display device 1 is operable in both light and dark conditions to reflect the visible indicators onto the surface to which the display device is mounted. The LED 11 is preferably positioned to emit light at the side of the display unit 3, directly opposite the EDGE GLOW material 3c which can re-emit said light.

The LED 11 is connected to a binary on/off switch 12 via circuit board 13, thus the user is able to switch the LED 11 on and off in use.

In the depicted embodiment a further power source 14 is provided by a solar panel mounted on the outer wall of battery casing 9. The solar panel 14 provides renewal power to the LED 11 via circuit board 13. A power indicator light 15 is provided to indicate to the user that the power source to the LED is on.

Alternatively, in an embodiment not shown, the further power source may be provided by a removable electrical connection to the 12V battery of the vehicle in which the display device is to be installed.

In use, normal daylight including UV light, or light originating from the LED light is projected onto the EDGE GLOW Perspex^{™} material 3c of the indicators 8a, 8b, 8c. The indicators are etched into the black material covering said material transfers light onto the surface of the vehicle's lower area part of windshield to which the display carrier 2 is normally mounted (not shown). Thus, the driver is able to see the reflected indicators on the windshield which indicators depict the correct and the incorrect orientation of the vehicle on the highway together with the position of the centre line of the highway relative to the carriageways. The light is provided by the light source 11.

The display device 1 has two fixture elements 16. In the depicted embodiment the fixture elements 16 are two suction cups.

In use, the user pushes the suction cups 16 against the front windshield of a vehicle to mount the display device 1 on the windshield (not shown). The display device is releasably mounted to the windshield such that the user may repeatedly attach and remove the display device 1 from the windshield of any vehicle in which s/he is travelling

Detachment of the display device 1 from the windshield requires the user to simply break the releasable contact between the suction cups and the surface of the windshield of the vehicle.

The fixture elements 16 are each connected to an attachment element 17 in the form of a rotatable cylinder of plastic material which can be hollowed. In this way the fixture elements 16 are mountable on the display carrier 2 by way of the attachment elements 17. In the depicted embodiment, the rotatable cylinders 17 have a pin 18 at each end. The pins are each positionable into a recess (not shown) in the display carrier 2, the pins being rotatable within the recesses. The housing of the display carrier 2 has a pawl (not shown) adjacent each rotatable cylinder 17, which pawl corresponds to a series of ratchet projections 19 on the outer circumference of the rotatable cylinders 17.

One of each series of ratchet projections 19 may be aligned with the pawl on the display carrier 2, so as to locate the display carrier 2 in a pre-determined position with respect to the rotatable cylinders 17 and, therefore, the fixture elements 16.

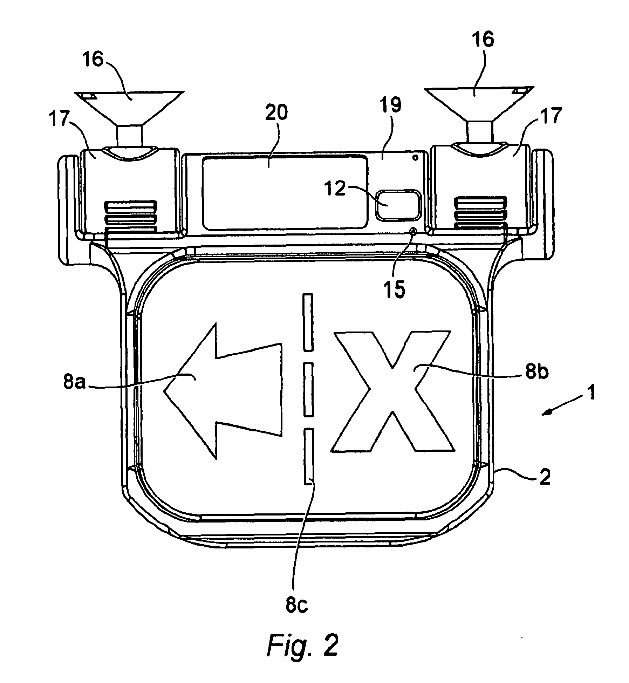

Figure 2 shows the display device 1 of Figure 1 in plan view with the open side of the housing of the display carrier 2 uppermost. The unidirectional arrow 8a is position to the left of the display carrier 2 is readiness for travel on a highway in a jurisdiction where the correct orientation of the vehicle on the highway is to the left. The centre line of the highway is depicted by visible indicator 8c and the incorrect orientation of the vehicle on the highway is depicted by the letter X 8b. The suction cups 16 provide fixing elements such that the display device 1 may be mounted on a windshield (not shown). The angle of the display carrier 2 with respect to the fixing elements 16 is adjustable by rotation of the cylinders 17 and is positionable by way of the ratchet elements 19 arranged on the circumference of the cylinders 17. In natural light conditions, the visible indicators 8a, 8b, 8c will be reflected onto the windshield by transmission of light through the Perspex material forming the indicators onto the surface of the windshield. In dark conditions wherein ambient light is insufficient to cause the light reflection, artificial light may be directed to the visible indicators 8a, 8b, 8c by switching on a power source (not shown) using switch 12. The power on indicator 15 will be illuminated to indicate to the user that the power is on. A battery compartment cover 20 is provided as part of the display carrier 2, which cover 20 provides access to the battery such that same may be replaced when expended.

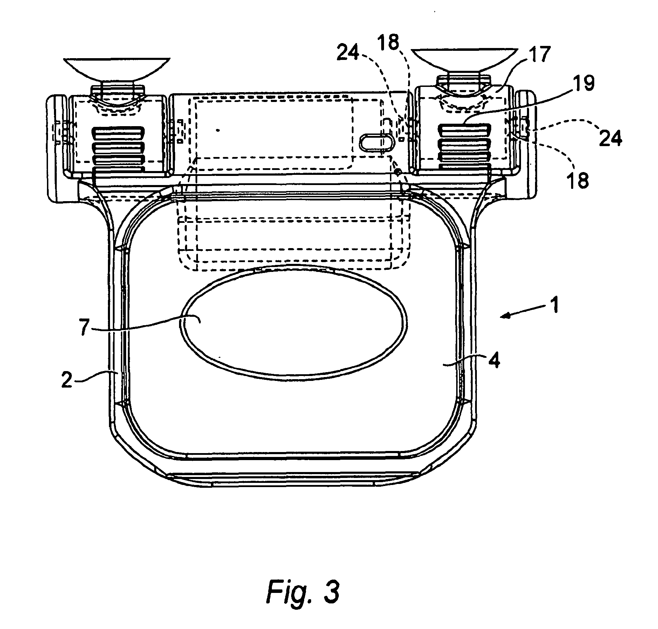

Figure 3 shows the display device 1 of Figure 1 in which the display unit has been removed. The display unit removal hole 7 is clearly visible in the base 4 of the housing of display carrier 2. Also clearly visible are the ratchet elements 19 on the rotatable cylinders 17 which allow the display carrier 2 to be adjustably positioned relative to the surface to which the display device 1 is to be mounted. Rotatable cylinders 17 are mounted onto the display carrier 2 via pins 18 which are rotatably positioned in recesses 24 on the display carrier 2.

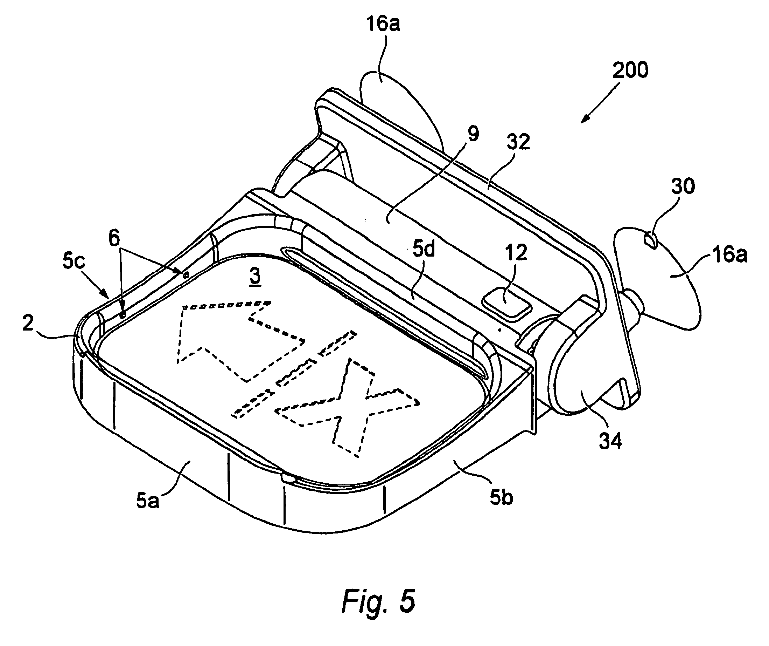

A second embodiment of the invention is shown in Figures 5 to 7. The second embodiment is similar to the display device of 1 of the first embodiment with the exception of the attachment element 17 and the fixture elements 16. Therefore the same numbering has been used to designate similar features similar in both embodiments. For the description of these features in the second embodiment 200, reference is made to the description of the first embodiment.

In the second embodiment of the invention, the fixture elements 16a can be a pair of suction cups 16 similar to those used in the first embodiment of the invention but are further provided with a projection 30 positioned on the external edge of at least one (and preferably both) of the cups. Projection 30 eases the release of the display device by allowing the user to easily grab said projection 30 and pull it, thus breaking the contact between the edge of the cup 16a and the surface it is positioned onto and allowing release of the display device 200.

In the second embodiment, the fixture elements 16a are connected to a U-shaped attachment element 32. As shown in Figure 5, the fixture elements 16a are attached to the base of the U-shaped element 32 and projects perpendicularly therefrom. The fixture element 32 is rotably mounted on the display carrier 2 by way of the end plate 34 positioned on each of the branches of the U-shaped attachment element 32. The element 32 is rotably adjustable in a series of positions with respect to the display carrier 2. Thus, the alignment of the display device 1 with respect to the surface on which it is mounted is repeatedly adjustable. In this way, the display device 1 is configured for use for any number of different windshields and for any number of different users.

Figure 6 shows a schematic representation of the side view of the display device of Figure 5 wherein the curve in side wall 5b to low point 23b is clearly visible.

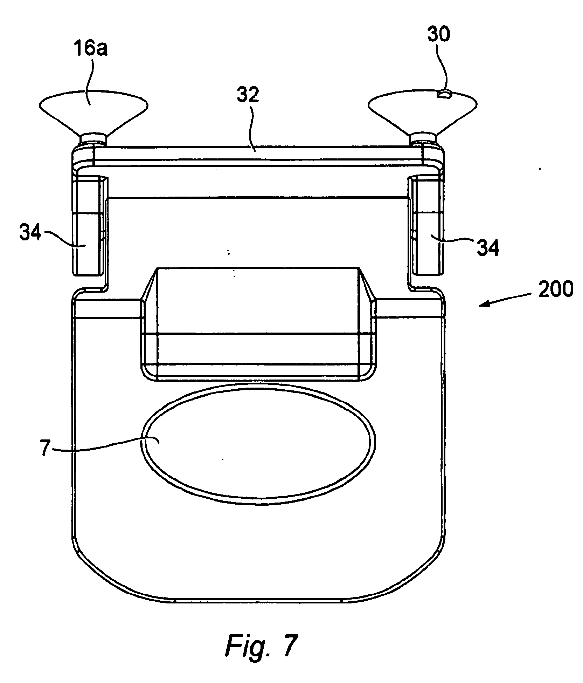

Figure 7 shows the display device 200 of Figures 5 and 6 from below, in which the display unit 3 has been removed and the display hole 7 is clearly visible.

In use, for all embodiments, the user of the display device 1, attaches the display device 1 at close proximity to the front windshield of a vehicle by fixing the suction cups 16 to the windshield. The location of the display device on the windshield is at the discretion of the user and may by repeatedly relocated until a suitable position is found but is usually located onto the inner surface of the front windshield or on the dashboard of the vehicle. The angle of the display carrier with respect to the windshield surface can then be adjusted by the ratchet and pawl mechanism of the rotatable cylinders 17 and the display carrier housing. The display unit 3 is then positioned within the display carrier 2 to indicate a correct and an incorrect orientation of the vehicle on a highway. If the correct orientation is for the vehicle to be positioned on the left side of the highway, the unidirectional arrow 8a will be positioned to the left in the display carrier 2, for example. Light is then transmitted, either by natural light or by the LED 11, to the visible indicators 8a, 8b, 8c, which are then reflected or projected onto the surface of the windshield of the vehicle.

Because the visible indicators are reflected or projected onto the surface of the windshield, the display device 1 need not be in the direct field of vision of the user, thereby, providing no direct visual distraction.

If the driver is travelling from a jurisdiction in which the correct orientation of the vehicle on the highway is on the left to a jurisdiction in which the correct orientation of the vehicle on the highway is on the right, the user may remove the display unit 3 from the display carrier 4 by placing a finger through the removal hole 7 and releasing the display unit 3. The display unit 3 can then be turned into the opposite orientation in which the unidirectional arrow 8a points to the right of the display carrier 2 and replaced into the display carrier 2 for retention therein by the retaining lugs 6.

Should the user so choose, the entire display device 1 may be detached from the windshield of the vehicle by removing the suction cups 16 or 16a from the windshield and the display device transported to another vehicle and attached to the windshield of the second vehicle in the same way as it was in the first vehicle.

If the windshield of the second vehicle is of a different configuration, for example, the angle of the windshield with respect to the ground is different to that of the first vehicle, the ratchet and pawl elements may be used to adjust the angle of the display carrier 2 with respect to the windshield.

## Claims

1. A display device (1, 200) for use in a vehicle, comprising a light emitting source (11) a display carrier (2) and a display unit (3), wherein the display carrier (2) is configured to contain the display unit (3), and at least one fixture element (16) operable to releasably attach the display device (1, 200) to a surface of the vehicle, the display unit (3) having at least two visible indicators (8a, 8b) whereby the display unit (3) is removably located within the display carrier (2),
**characterized in that**
the display unit (3) is reversible, such that an orientation of the at least two visible indicators (8a, 8b) can be reversed within the display device (1, 200) in order to allow a user to adapt the display device (1, 200) from a first jurisdiction in which the correct orientation of the vehicle on the driving surface is on the left side of a highway to a second jurisdiction in which the correct orientation of the vehicle on the driving surface is on the right side of a highway, and thereby provide the user of the vehicle with visual information relating to a correct and an incorrect orientation of the vehicle on a driving surface.

2. A display device (1, 200) according to claim 1, wherein said indicators comprises a first visible indicator (8a) depicting an unidirectional arrow, a second visible indicator (8b) depicting a "X", and a third visible indicator (8c) depicting the centre line of the driving surface and located between the first and the second visible indicator on the display unit.

3. A display device (1, 200) according to any one of the preceding claims, wherein the at least two visible indicators (8a, 8b) are indirectly visible to a user.

4. A display device (1, 200) according to any one of the preceding claims, wherein the at least two visible indicators (8a, 8b) project an image onto the surface thereby providing a visible image of the at least two indicators (8a, 8b).

5. A display device (1, 200) according to claim 4, wherein the image is a reflection of the at least two visible indicators (8a, 8b) on the surface.

6. A display device (1, 200) according to claim 4, wherein the image is a light-emitted projection in the shape of the at least two visible indicators (8a, 8b) on the surface.

7. A display device (1, 200) according to any one of the preceding claims, wherein each of the at least two visible indicators (8a, 8b) comprises an indicia.

8. A display device (1, 200) according to claim 7, wherein the at least two visible indicators (8a, 8b) are separated by a further visible indicator (8c), which further indicator (8c) represents the centre line of a driving surface.

9. A display device according to claim 7, wherein at least two visible indicia are formed of a light transforming twin coloured material.

10. A display device (1, 200) according to any one of the preceding claims, wherein the at least one fixture element (16) further comprises an attachment element (17), which attachment element (17) is mountable on the display carrier (2).

11. A display device (1, 200) according to any one of the preceding claims, wherein the display carrier (2) further comprises at least one retaining element (6) configured to positively locate and retain the display unit within the housing.

12. A display device (1, 200) according to any one of the preceding claims, wherein the display carrier (2) comprises a power source casing which is a rechargeable battery housing (9) and/or comprises a solar panel (14).

## Patentansprüche

1. Eine Anzeigevorrichtung (1, 200) zur Verwendung in einem Fahrzeug, die eine lichtemittierende Quelle (11), einen Anzeigeträger (2) und eine Anzeigeeinheit (3), wobei der Anzeigeträger (2) konfiguriert ist, um die Anzeigeeinheit (3) zu enthalten, und mindestens ein Befestigungselement (16) beinhaltet, das funktionsfähig ist, um die Anzeigevorrichtung (1, 200) lösbar an einer Oberfläche des Fahrzeugs anzubringen, wobei die Anzeigeeinheit (3) mindestens zwei sichtbare Anzeigeeinrichtungen (8a, 8b) aufweist, wobei die Anzeigeeinheit (3) entfernbar innerhalb des Anzeigeträgers (2) angeordnet ist,
**dadurch gekennzeichnet, dass**
die Anzeigeeinheit (3) umkehrbar ist, so dass eine Ausrichtung der mindestens zwei sichtbaren Anzeigeeinrichtungen (8a, 8b) innerhalb der Anzeigevorrichtung (1, 200) umgekehrt werden kann, um einem Benutzer zu ermöglichen, die Anzeigevorrichtung (1, 200) von einer ersten Rechtsprechung, bei der die korrekte Ausrichtung des Fahrzeugs auf der Fahroberfläche auf der linken Seite einer Straße ist, auf eine zweite Rechtsprechung, bei der die korrekte Ausrichtung des Fahrzeugs auf der Fahroberfläche auf der rechten Seite einer Straße ist, anzupassen, und dadurch den Benutzer des Fahrzeugs mit visuellen Informationen bezüglich einer korrekten und einer nicht korrekten Ausrichtung des Fahrzeugs auf einer Fahroberfläche zu versorgen.

2. Anzeigevorrichtung (1, 200) gemäß Anspruch 1, wobei die Anzeigeeinrichtungen eine erste sichtbare Anzeigeeinrichtung (8a), die einen unidirektionalen Pfeil darstellt, eine zweite sichtbare Anzeigeeinrichtung (8b), die ein "X" darstellt, und eine dritte sichtbare Anzeigeeinrichtung (8c), die die Mittellinie der Fahroberfläche darstellt und auf der Anzeigeeinheit zwischen der ersten und der zweiten sichtbaren Anzeigeeinrichtung angeordnet ist, beinhalten.

3. Anzeigevorrichtung (1, 200) gemäß einem der vorhergehenden Ansprüche, wobei die mindestens zwei sichtbaren Anzeigeeinrichtungen (8a, 8b) für einen Benutzer indirekt sichtbar sind.

4. Anzeigevorrichtung (1, 200) gemäß einem der vorhergehenden Ansprüche, wobei die mindestens zwei sichtbaren Anzeigeeinrichtungen (8a, 8b) ein Bild auf die Oberfläche projizieren, wodurch ein sichtbares Bild der mindestens zwei Anzeigeeinrichtungen (8a, 8b) bereitgestellt wird.

5. Anzeigevorrichtung (1, 200) gemäß Anspruch 4, wobei das Bild eine Reflektierung der mindestens zwei sichtbaren Anzeigeeinrichtungen (8a, 8b) auf der Oberfläche ist.

6. Anzeigevorrichtung (1, 200) gemäß Anspruch 4, wobei das Bild eine lichtemittierte Projektion in der Form der mindestens zwei sichtbaren Anzeigeeinrichtungen (8a, 8b) auf der Oberfläche ist.

7. Anzeigevorrichtung (1, 200) gemäß einem der vorhergehenden Ansprüche, wobei jede der mindestens zwei sichtbaren Anzeigeeinrichtungen (8a, 8b) ein Zeichen beinhaltet.

8. Anzeigevorrichtung (1, 200) gemäß Anspruch 7, wobei die mindestens zwei sichtbaren Anzeigeeinrichtungen (8a, 8b) durch eine weitere sichtbare Anzeigeeinrichtung (8c) getrennt sind, wobei die weitere Anzeigeeinrichtung (8c) die Mittellinie einer Fahroberfläche abbildet.

9. Anzeigevorrichtung gemäß Anspruch 7, wobei mindestens zwei sichtbare Zeichen aus einem Licht transformierenden, zweifarbigen Material gebildet sind.

10. Anzeigevorrichtung (1, 200) gemäß einem der vorhergehenden Ansprüche, wobei das mindestens eine Befestigungselement (16) ferner ein Anbringungselement (17) beinhaltet, wobei das Anbringungselement (17) auf dem Anzeigeträger (2) montierbar ist.

11. Anzeigevorrichtung (1, 200) gemäß einem der vorhergehenden Ansprüche, wobei der Anzeigeträger (2) ferner mindestens ein Halteelement (6) beinhaltet, das konfiguriert ist, um die Anzeigeeinheit innerhalb des Gehäuses richtig anzuordnen und zu halten.

12. Anzeigevorrichtung (1, 200) gemäß einem der vorhergehenden Ansprüche, wobei der Anzeigeträger (2) eine Leistungsquellenhülle beinhaltet, die ein Akkumulatorengehäuse (9) ist, und/oder einen Solarkollektor (14) beinhaltet.

## Revendications

1. Un dispositif d'affichage (1, 200) destiné à être utilisé dans un véhicule, comprenant une source d'émission de lumière (11), un support d'affichage (2) et une unité d'affichage (3), le support d'affichage (2) étant configuré pour contenir l'unité d'affichage (3), et au moins un élément de fixation (16) pouvant être mis en oeuvre pour attacher de façon à ce qu'il puisse être libéré le dispositif d'affichage (1, 200) sur une surface du véhicule, l'unité d'affichage (3) ayant au moins deux indicateurs visibles (8a, 8b), l'unité d'affichage (3) étant placée de façon amovible au sein du support d'affichage (2),
**caractérisé en ce que**
l'unité d'affichage (3) est réversible, si bien qu'une orientation des au moins deux indicateurs visibles (8a, 8b) peut être inversée au sein du dispositif d'affichage (1, 200) afin de permettre à un utilisateur d'adapter le dispositif d'affichage (1, 200) d'une première juridiction dans laquelle l'orientation correcte du véhicule sur la surface de conduite est sur le côté gauche d'une chaussée à une deuxième juridiction dans laquelle l'orientation correcte du véhicule sur la surface de conduite est sur le côté droit d'une chaussée, et de fournir de ce fait à l'utilisateur du véhicule des informations visuelles concernant une orientation correcte et une orientation incorrecte du véhicule sur une surface de conduite.

2. Un dispositif d'affichage (1, 200) selon la revendication 1, dans lequel lesdits indicateurs comprennent un premier indicateur visible (8a) décrivant une flèche unidirectionnelle, un deuxième indicateur visible (8b) décrivant un « X », et un troisième indicateur visible (8c) décrivant la ligne centrale de la surface de conduite et placé entre le premier et le deuxième indicateur visible sur l'unité d'affichage.

3. Un dispositif d'affichage (1, 200) selon n'importe laquelle des revendications précédentes, dans lequel les au moins deux indicateurs visibles (8a, 8b) sont indirectement visibles pour un utilisateur.

4. Un dispositif d'affichage (1, 200) selon n'importe laquelle des revendications précédentes, dans lequel les au moins deux indicateurs visibles (8a, 8b) projettent une image sur la surface, fournissant de ce fait une image visible des au moins deux indicateurs (8a, 8b).

5. Un dispositif d'affichage (1, 200) selon la revendication 4, dans lequel l'image est une réflexion des au moins deux indicateurs visibles (8a, 8b) sur la surface.

6. Un dispositif d'affichage (1, 200) selon la revendication 4, dans lequel l'image est une projection émise par de la lumière sous la forme des au moins deux indicateurs visibles (8a, 8b) sur la surface.

7. Un dispositif d'affichage (1, 200) selon n'importe laquelle des revendications précédentes, dans lequel chacun des au moins deux indicateurs visibles (8a, 8b) comprend un indice.

8. Un dispositif d'affichage (1, 200) selon la revendication 7, dans lequel les au moins deux indicateurs visibles (8a, 8b) sont séparés par un indicateur visible supplémentaire (8c), lequel indicateur supplémentaire (8c) représente la ligne centrale d'une surface de conduite.

9. Un dispositif d'affichage selon la revendication 7, dans lequel au moins deux indices visibles sont formés en un matériau bicolore transformant la lumière.

10. Un dispositif d'affichage (1, 200) selon n'importe laquelle des revendications précédentes, dans lequel le au moins un élément de fixation (16) comprend de plus un élément d'attache (17), lequel élément d'attache (17) peut être monté sur le support d'affichage (2).

11. Un dispositif d'affichage (1, 200) selon n'importe laquelle des revendications précédentes, dans lequel le support d'affichage (2) comprend de plus au moins un élément de retenue (6) configuré pour placer et retenir de façon positive l'unité d'affichage au sein du logement.

12. Un dispositif d'affichage (1, 200) selon n'importe laquelle des revendications précédentes, dans lequel le support d'affichage (2) comprend un boîtier pour source d'énergie qui est un logement de batterie rechargeable (9) et / ou comprend un panneau solaire (14).
